Europäisches Patentamt

European Patent Office

Office européen des brevets

(19)

(11) **EP 0 621 966 B1**

(12)

# FASCICULE DE BREVET EUROPEEN

(45) Date de publication et mention
de la délivrance du brevet:
**20.05.1998 Bulletin 1998/21**

(21) Numéro de dépôt: **93900254.9**

(22) Date de dépôt: **16.11.1992**

(51) Int Cl.⁶: **G06F 3/033**, G06F 3/023

(86) Numéro de dépôt international:
**PCT/FR92/01065**

(87) Numéro de publication internationale:
**WO 94/11803 (26.05.1994 Gazette 1994/12)**

(54) **DISPOSITIF POUR SIMPLIFIER L'UTILISATION D'UN SYSTEME INFORMATIQUE**

VORRICHTUNG ZUR VEREINFACHUNG DES GEBRAUCHS EINES INFORMATIONSSYSTEMS

DEVICE FOR SIMPLIFYING THE UTILIZATION OF A DATA PROCESSING SYSTEM

(84) Etats contractants désignés:
**AT BE CH DE DK ES FR GB GR IE IT LI LU MC NL
SE**

(43) Date de publication de la demande:
**02.11.1994 Bulletin 1994/44**

(73) Titulaire: **PILGRIM
91961 Les Ulis (FR)**

(72) Inventeur: **Truchet, Philippe
06560 Valbonne (FR)**

(74) Mandataire: **Maureau, Philippe et al
Cabinet GERMAIN & MAUREAU,
12, rue Boileau,
BP 6153
69466 Lyon Cedex 06 (FR)**

(56) Documents cités:
**EP-A- 0 395 469          WO-A-92/09037**

- **IBM TECHNICAL DISCLOSURE BULLETIN vol.
26, no. 5, Octobre 1983, NEW YORK US pages
2303 - 2305 PATCH G. P. ET AL 'TOUCH PANEL
ATTACHMENT TO CRT USING LIGHT PEN
INTERFACE'**

## Description

La présente invention telle qu'elle est définie dans les revendications a pour objet un dispositif pour simplifier l'utilisation d'un système informatique.

Un système informatique tel qu'un micro-ordinateur comprend une unité centrale à micro-processeur et un clavier formant organe de commande et de saisie des informations.

Afin de faciliter l'utilisation de systèmes informatiques, il est connu de mettre en oeuvre un clavier tactile recouvrant l'écran et au niveau duquel l'opérateur intervient directement en pointant un doigt, ou un organe de commande spécifique, suivant le type de clavier tactile dont il s'agit. Toutefois, soit un tel système ne comprend pas de clavier indépendant de commande, soit le système est spécialement conçu pour fonctionner avec un clavier tactile, dont il est tenu compte dans les applications traitées par le système. Le document WO-A-9 209 037 divulgue un tel dispositif.

Le but de l'invention est de fournir un dispositif qui, destiné à simplifier l'utilisation d'un système informatique par mise en oeuvre d'un clavier tactile au niveau de l'écran, soit de conception simple et permette l'apparition de fenêtres de commande à l'écran se superposant à l'application en cours, sans modification de cette application.

A cet effet, le dispositif qu'elle concerne, en générant des fenêtres se superposant à l'application en cours, destinées à une commande par un écran tactile recouvrant l'écran de l'ordinateur, est caractérisé en ce qu'il comporte au moins une unité centrale à microprocesseur associé à ses mémoires **RAM** et **ROM**, une mémoire **RAM** de position de fenêtres, une mémoire **RAM** de données à afficher dans les fenêtres, un interface clavier destiné à être connecté au connecteur du clavier de l'ordinateur, un circuit périphérique de gestion de clavier tactile et en ce qu'un système de commutation électronique lui permet de s'intercaler entre le connecteur d'écran de l'ordinateur et l'écran lui-même de façon à pouvoir sélectionner en temps réel la source des données à afficher, clavier ou clavier tactile.

Ce dispositif permet l'incrustation d'une fenêtre d'affichage sur l'écran de visualisation dudit système informatique de façon complètement indépendante de l'application en cours d'utilisation, sans avoir à modifier ou à intervenir de quelque façon que ce soit sur le matériel du système informatique ni sur le logiciel de l'application en cours sur ledit système. La fenêtre incrustée par le dispositif selon l'invention peut aussi se décomposer en multifenêtres, chacune correspondant à la partie affichage du dispositif.

Cette ou ces fenêtres peuvent, par exemple, être utilisées pour l'affichage simultané d'une application se déroulant parallèlement à l'application principale en cours sur le système informatique auquel est connecté le dispositif.

Le mode incrustation sera toujours graphique, c'est-à-dire que l'incrustation ne dépend pas du mode d'affichage utilisé par le système sur lequel est connecté le dispositif (mode caractère ou mode graphique).

Le dispositif, selon l'invention, permet donc le partage d'un écran de visualisation d'un système informatique autorisant le déroulement de deux applications logicielles générées par deux systèmes électroniques indépendants et affichant leurs résultats et/ou leurs informations sur le même écran, sans que l'application principale ait connaissance de ce partage d'écran. Le dispositif permet donc de superposer, à une application standard, une application parallèle permettant d'intervenir sur l'application principale tout en conservant l'intégrité de cette dernière.

Pour cela, le dispositif est capable de simuler vers le système informatique sur lequel il affiche ses fenêtres, l'entrée d'informations comme si celles-ci étaient saisies sur le clavier du système informatique (simulation organe de saisie).

Le dispositif permet l'adjonction d'un mode de saisie simple, de type clavier tactile, recouvrant l'écran du système informatique et agissant en substitution du clavier mécanique et/ou autres organes de saisie et/ou de pointage (souris, boule de déplacement, etc...) habituellement connectés à ces systèmes informatiques.

Les sytèmes informatiques disposent toujours d'un accès écran, clavier et bus de données sous forme de connecteurs ou non. Le dispositif, selon l'invention, utilise ces accès et aucune modification n'est nécessaire sur l'existant.

Selon des modes particuliers de réalisation :

- le dispositif peut faire l'objet d'un boîtier indépendant possédant sa propre alimentation.
- le dispositif peut être inséré dans un système existant (en tant que carte d'extension bus).

Le procédé peut également être utilisé lors de la phase de conception d'un système informatique de type micro-ordinateur hôte ou autre.

Il est à noter que le clavier tactile est considéré ici comme un exemple de périphérique possible se conjuguant de façon efficace avec la convivialisation d'applications, et que tout autre périphérique de saisie pourrait être cité en lieu et place, tel qu'une souris micro-informatique, une table à digitalise, une boule de déplacement etc...

Chacun de ces périphériques peut être pris en compte par le dispositif, ce dernier transformant les actions de tous types de périphériques en appui clavier vers le micro-ordinateur hôte.

La technique du procédé consiste donc essentiellement en la description de l'inscrustation des fenêtres, le reste en découlant sous la forme de réalisation de logiciels d'émulation d'un clavier permettant de transformer les informations issues de divers outils périphériques en informations vers l'ordinateur hôte simulant la présence physique du clavier.

Selon une caractéristique de l'invention, ce dispositif comporte une unité de gestion d'un clavier tactile, un interface clavier vers l'ordinateur hôte et que l'unité centrale transforme les informations d'appui du clavier tactile en données clavier standards vers l'ordinateur.

Avantageusement, la partie micro-processeur est à même de générer des séquences consécutives pré-programmées d'appuis clavier vers l'ordinateur.

En outre, le clavier tactile recouvrant l'écran de l'ordinateur, la partie unité centrale est à même de lier les fenêtres d'affichage du dispositif, l'appui sur le clavier tactile et les séquences d'appui clavier correspondantes, générées vers l'ordinateur.

De toute façon, l'invention sera bien comprise, à l'aide de la description qui suit, en référence au dessin schématique annexé représentant, à titre d'exemple non limitatif, une forme d'exécution de ce dispositif :

Figure 1 en est une vue schématique ;
Figure 2 est une vue de trois écrans, respectivement, sans incrustation et avec deux types d'incrustation de fenêtres ;
Figure 3 est une vue schématique d'un écran sans dispositif puis avec dispositif selon l'invention.

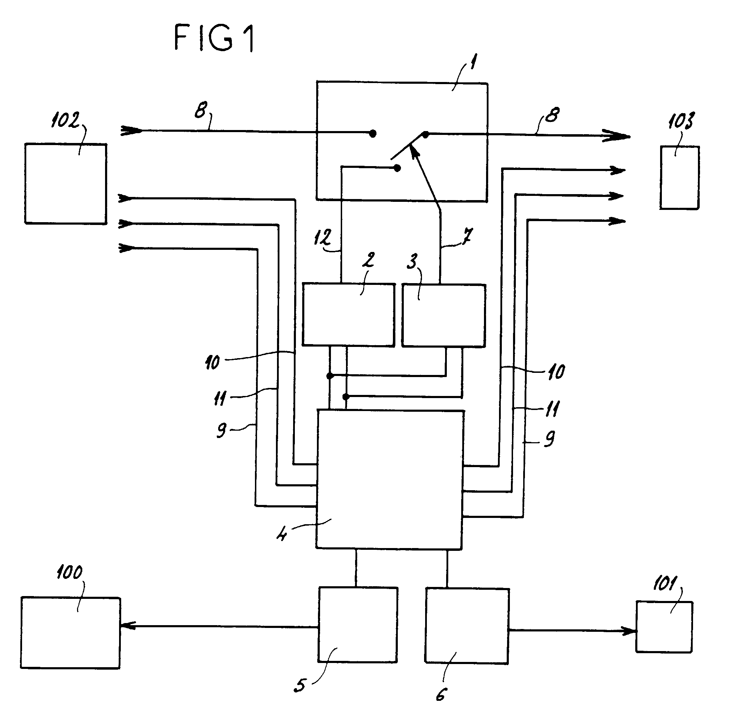

La figure 1 représente un dispositif selon l'invention dans lequel les signaux principalement utilisés issus du connecteur d'écran 102 de l'ordinateur sont :

- Synchro trame 10 : signal de rafraichissement d'écran
- Synchro ligne 11 : signal de début de ligne
- Validation données 9 : valide les données présentes sur le bus données 8
- Bus données : données devant être affichées sur l'écran.

Le bloc 1 représente un commutateur électronique permettant de sélectionner pour affichage sur l'écran :

- soit les données 8 issues du micro-ordinateur,
- soit les données 12 devant être incrustées sur l'écran par le dispositif.

Ce commutateur pourra être matérialisé sous la forme de buffers standards (type 244 par exemple).

Le bloc 2 représente la RAM (mémoire) vidéo dans laquelle sont mémorisées les données devant être incrustées.

Le bloc 3 représente une RAM (mémoire) contenant l'image de la position de la ou des fenêtres à incruster sur l'écran, les bits de donnée correspondant actionnant la commutation du bloc 1.

Le bloc 4 est une unité centrale à base d'un microprocesseur associé à ses mémoires de travail RAM et ses mémoires fortes ROM, et permet la gestion du dispositif et en particulier : - le calcul de l'adresse de l'écran à laquelle va être affichée la donnée en cours sur le bus de données. Cette adresse est calculée à partir des informations synchro trame et syncho ligne - Le remplissage des mémoires 2 et 3 - La gestion 6 du clavier tactile 101 - La gestion 5 de la connexion clavier 100 vers l'ordinateur.

Paramètres d'écran.

Un écran LCD peut présenter divers types de résolution, par exemple 640 points en résolution horizontale et 200, 400, 480 points en vertical (non exhaustif).

Le procédé fonctionne quelle que soit la résolution de l'écran, les paramètres de résolution horizontale et verticale de l'écran étant programmables dans le procédé sous forme manuelle ou logicielle par le microprocesseur du procédé.

Un écran est aussi caractérisé par son "taux de multiplexage" : ce paramètre permet de savoir de quelle façon l'écran va être rafraichi : soit en simple écran, soit en deux demi-écrans.

Un dernier paramètre est la largeur du bus de données de l'écran : en général pour des écrans de résolution suffisante (640 * 200), le bus de données est de 4 bits de large ou 8 bits de large décomposés en deux fois 4 bits si le taux de multiplexage est moitié de la résolution verticale.

Exemple : écran de résolution 640 * 400 avec un taux de multiplexage de 1/200ème sera rafraichi en 2 1/2 écrans, chaque 1/2 écran étant accédé simultanément par un bus de 4 bits de large affecté à chaque 1/2 écran.

Tous ces paramètres peuvent être pris en compte par le dispositif de différentes manières: positionnement de micro-interrupteurs, programmation logicielle avec téléchargement de type d'écran, etc...

Suivant la valeur de ces paramètres, le micro-processeur positionnera ses circuits logiques conformément au type d'écran utilisé. Mais quel que soit ce type, le principe de fonctionnement du dispositif restera le même.

Nous supposerons par la suite un écran de résolution 640 * 400 ayant un taux de multiplexage de 1/400ème (se rafraichissant donc de manière linéaire) et ayant un bus de données de 8 bits de large.

Suite à la génération du signal top trame, la première valeur aparaissant sur le bus données 8 et validée par le signal validation données 9 correspond au huit premiers pixels en haut à gauche de l'écran.

Les valeurs suivantes balaieront donc tout l'écran, ligne par ligne.

Dans ce cas, le dispositif va pouvoir incruster des fenêtres placées sur l'écran à une position multiple de huit pixels dans le sens horizontal.

Avec un bus de quatre bits de large, la résolution de position de la ou des fenêtres serait de quatre pixels dans le sens horizontal, la résolution de placement en vertical restant toujours le pixel.

Le bus de données faisant huit bits de large, l'écran ayant une résolution de 640 points horizontale et les huit bits de données correspondant à huit pixels horizontaux, on aura pour chaque ligne : 640/8 = 80 fois le signal de validation de données pour l'affichage d'une ligne horizontale.

Le dispositif attend, pour démarrer son cycle, le top de synchronisation généré par le signal synchro trame, signifiant le début d'un rafraîchissement complet de l'écran.

Ce top syncho trame initialise un compteur dans le bloc 4 dont le but est de transformer en valeur binaire le nombre de signaux "validation données" apparus depuis ce top de synchronisation trame.

La valeur binaire (quinze bits pour l'exemple en cours) entre sur la RAM de fenêtre bloc 3 ainsi que sur la RAM de données bloc 2.

La donnée correspondant à l'adresse ainsi présentée sur cette RAM bloc 3 par le compteur du bloc 4 va permettre de commander le commutateur 1 par la commande 7 et donc, suivant la valeur de cette donnée, d'entraîner sur le bus de données vers l'écran soit :

- La valeur présente, à ce moment sur le bus de données issu du micro-ordinateur (par exemple : donnée = 0 dans la RAM 3)
- La valeur présente à ce moment sur le bus de données de la RAM bloc 2 (donnée = 1 dans la RAM 3).

Les RAM 2 et 3 auront été préalablement programmées par le microprocesseur du dispositif comme suit :

Soit à ouvrir une fenêtre sur l'écran à la position délimitée par X1Y1-X2Y2- X3Y3-X4Y4,

X représentant les coordonnées horizontales et Y les coordonnées verticales.

Les valeurs de X, pour l'exemple d'écran en cours avec un bus de données de huit bits, doivent donc être des multiples de 8, pour 640 pixels horizontaux, comprises entre 0 et 79.

Les valeurs de Y sont comprises, pour cet écran, entre 0 et 399 (400 pixels de résolution verticale).

Les valeurs des données contenues dans les RAMs 2 et 3 sont organisées comme les valeurs des données sur l'écran : pour la RAM 2, contenant les valeurs des données devant être affichées en mode incrusté sur l'écran, ces valeur sont programmées dans la RAM aux adresses correspondantes de l'endroit ou elles doivent être affichées : la première valeur à afficher se trouvant en position X1Y1 de l'écran, l'adresse à laquelle on trouvera cette valeur dans la RAM 2 sera : (X1*80) + Y1.

La commande 7 du commutateur électronique 1 se faisant par la donnée contenue à cette même adresse dans la RAM 2 (ici par exemple, 1 pour commuter le bloc n° 1 vers la prise de données dans la RAM 2).

La RAM bloc 2 va être programmée de la manière suivante :

Données correspondant aux pixels à afficher entre les adresses :

$$(X1*80) \quad + Y1 \text{ à } (X1*80) \quad + Y2$$
$$[(X1+1)*80] \quad + Y1 \text{ à } [(X1+1)*80] \quad + Y2$$
$$[5X1+2)*80] \quad + Y1 \text{ à } [(X1+2)*80] \quad + Y2$$
$$"\quad\quad\quad\quad "$$
$$"\quad\quad\quad\quad "$$
$$(X2*80) \quad + Y1 \text{ à } [X2*80) \quad + Y2$$

De même, dans cette même zone d'adresses, la RAM 3 contiendra des bits à 1 permettant la commutation par le bloc n° 1 entre l'écran et le contenu de la RAM 2 lorsque ces adresses seront accédées par le bloc 4, adresses créées par les signaux de contrôle de l'écran et correspondant donc à la position de la donnée sur l'écran en cours de prise en compte.

Le dispositif, selon l'invention, peut être utilisé avec un micro-ordinateur type PC (non limitatif).

Le dispositif, selon l'invention, est connecté au micro-ordinateur par l'intermédiaire des connecteurs clavier 100 et écran 102 dudit micro-ordinateur.

Un clavier tactile analogique (technologie résistive ou autre) recouvrant l'écran du micro-ordinateur, est connecté en 101 au dispositif.

Le dispositif prend les informations issues du clavier du micro-ordinateur et du clavier tactile et les retransmet au micro-ordinateur comme si seul le clavier du micro-ordinateur hôte était branché.

- L'appui sur le clavier tactile est transformé par le procédé en une donnée "clavier" et présentée comme telle au micro-ordinateur par l'intermédiaire du connecteur clavier du micro-ordinateur.

Dans le cas de l'utilisation d'un clavier tactile résistif, l'unité de gestion du clavier tactile 6 comporte un convertisseur analogique digital à deux canaux d'entrée permettant la conversion des valeurs analogiques sur l'axe x et sur l'axe y fournies par le clavier tactile en valeur numériques utilisable par l'unité centrale 4. L'unité centrale en déduit par simple calcul la position de l'appui en coordonnées absolues. Une table de correspondance interne à l'unité centrale permet alors au logiciel de l'unité centrale d'envoyer les codes claviers correspondants à l'ordinateur.

- Les actions sur le clavier réel sont retransmises telles quelles au micro-ordinateur par l'intermédiaire du procédé.

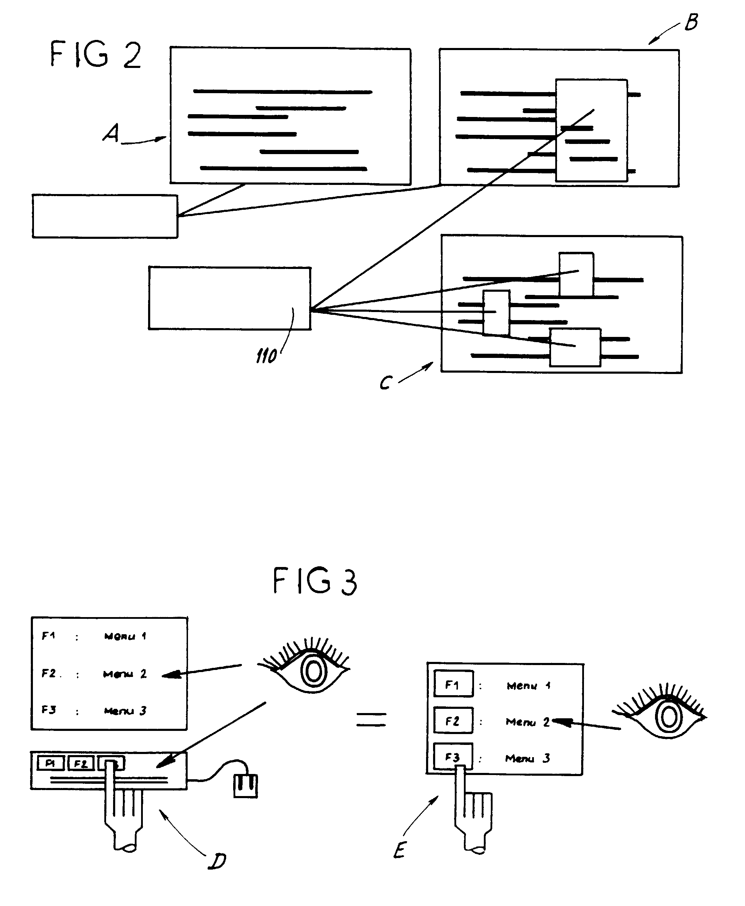

Ainsi, comme montré à la figure 2, sur une application existante exécutée de façon standard sur le micro-ordinateur comme montré en A, le dispositif peut :

- Ouvrir des fenêtres 110 sur l'écran du micro-ordinateur hôte définissant des zones d'appui directes, comme montré en B et C,
- Affecter à chaque zone d'écran ainsi définie, lors de l'appui sur le clavier tactile, l'équivalent de l'action d'une touche ou d'une séquence de touches qui serait effectuée sur le clavier, comme montré à la figure 3, qui schématise en D l'utilisation traditionnelle d'un système informatique et en E l'utilisation du même système avec mise en oeuvre du dispositif selon l'invention.

Le dispositif possède une mémoire l'autorisant à enregistrer les associations "zones d'écran - zones d'écran tactile - touches ou séquences de touches correspondantes.
De plus, son électronique lui permet, si besoin est, d'enregistrer les suites d'associations se déroulant.

- Une variante d'application serait qu'une ou plusieurs des fenêtres générées par le dispositif comporte le dessin des touches de clavier, le dispositif générant alors lors de l'appui sur ce ou ces "clavier virtuel" les mêmes séquences que le clavier de l'ordinateur, ce qui permet de se passer de clavier mécanique externe.

**Revendications**

1. Dispositif électronique destiné à simplifier l'utilisation d'un système informatique en générant des fenêtres se superposant à l'application en cours, destinées à une commande par un écran tactile recouvrant l'écran de l'ordinateur, caractérisé en ce qu'il comporte au moins une unité centrale à microprocesseur associé à ses mémoires RAM et ROM (4), une mémoire RAM (3) de position de fenêtres, une mémoire RAM (2) de données à afficher dans les fenêtres, une interface clavier (5) destiné à être connecté au connecteur (100) du clavier de l'ordinateur, un circuit périphérique (6) de gestion de clavier tactile (101), et en ce qu'un système de commutation électronique (1) lui permet de s'intercaler entre le connecteur d'écran (102) de l'ordinateur et l'écran (103) lui-même de façon à pouvoir sélectionner en temps réel la source des données à afficher, clavier (100) ou clavier tactile (101).

2. Dispositif électronique selon la revendication 1, caractérisé en ce qu'il est inséré dans un boîtier s'intercalant entre la sortie écran d'un ordinateur et l'écran lui-même.

3. Dispositif électronique selon la revendication 1, caractérisé en ce qu'il se présente sous la forme d'une carte électronique insérée directement dans l'ordinateur.

4. Dispositif électronique selon la revendication 1, caractérisé en ce qu'il se présente sous forme de module, indépendant dans un ordinateur.

5. Dispositif électronique selon l'une quelconque des revendications 1 à 4, caractérisé en ce qu'il comporte une unité (6) de gestion d'un clavier tactile, un interface clavier (5) vers l'ordinateur hôte et que l'unité centrale (4) transforme les informations d'appui du clavier tactile en données clavier standards vers l'ordinateur.

6. Dispositif électronique selon l'une quelconque des revendications 1 à 5, caractérisé en ce que la partie micro-processeur (4) est à même de générer des séquences consécutives pré-programmées d'appui claviers vers l'ordinateur.

7. Dispositif électronique selon les revendications 1 à 6, caractérisé en ce que le clavier tactile recouvrant l'écran de l'ordinateur, la partie unité centrale (4) est à même de lier les fenêtres d'affichage du dispositif, l'appui sur le clavier tactile et les séquences d'appui clavier correspondantes, générées vers l'ordinateur.

**Patentansprüche**

1. Elektronische Vorrichtung, die dazu bestimmt ist, die Verwendung eines Datenverarbeitungssystem zu vereinfachen, indem Fenster erzeugt werden, welche die laufende Anwendung überlagern und für eine Steuerung mittels eines Sensorbildschirms bestimmt sind, der den Bildschirm des Rechners bedeckt, dadurch gekennzeichnet, daß sie mindestens eine Zentraleinheit (4) mit Mikroprozessor, der mit seinen RAM- und ROM-Speichern assoziiert ist, einen RAM-Speicher (3) für die Position der Fenster, einen RAM-Speicher (2) für die in den Fenstern anzuzeigenden Daten, eine Tastaturschnittstelle (5), die dazu bestimmt ist, mit dem Steckverbinder (100) der Tastatur des Rechners verbunden zu werden, und eine periphere Schaltung (6) für die verwaltung einer Sensortastatur (101) aufweist und daß ein elektronisches Schaltsystem (1) ihre Zwischenschaltung zwischen den Bildschirm-Steckverbinder (102) des Rechners und den Bildschirm (103) selbst ermöglicht, um in Echtzeit die Quelle der anzuzeigenden Daten, Tastatur (100) oder Sensortastatur (101), wählen zu können.

2. Elektronische vorrichtung nach Anspruch 1, dadurch gekennzeichnet, daß sie in ein Gehäuse eingefügt ist, das zwischen den Bildschirmausgang eines Rechners und den Bildschirm selbst geschaltet ist.

3. Elektronische Vorrichtung nach Anspruch 1, dadurch gekennzeichnet, daß sie in Form einer elektronischen Karte vorliegt, die direkt in den Rechner eingefügt ist.

4. Elektronische Vorrichtung nach Anspruch 1, dadurch gekennzeichnet, daß sie in Form eines Moduls vorliegt, der sich unabhängig in einem Rechner befindet.

5. Elektronische Vorrichtung nach einem der Ansprüche 1 bis 4, dadurch gekennzeichnet, daß sie eine Einheit (6) für die Verwaltung einer Sensortastatur und eine Tastaturschnittstelle (5) zum Hostrechner aufweist und daß die Zentraleinheit (4) die Druckinformationen der Sensortastatur in Standardtastaturdaten zum Rechner umwandelt.

6. Elektronische Vorrichtung nach den Ansprüchen 1 bis 5, dadurch gekennzeichnet, daß der Mikroprozessorteil (4) imstande ist, vorprogrammierte aufeinanderfolgende Tastaturdruck-Sequenzen zum Rechner zu erzeugen.

7. Elektronische Vorrichtung nach einem der Ansprüche 1 bis 6, dadurch gekennzeichnet, daß der Zentraleinheitsteil (4), wenn die Sensortastatur den Bildschirm des Rechners bedeckt, imstande ist, die Anzeigefenster der Vorrichtung, den Druck auf die Sensortastatur und die entsprechenden, zum Rechner erzeugten Tastaturdrucksequenzen zu verbinden.

**Claims**

1. Electronic device designed to simplify the use of a data processing system by generating windows which are superimposed on the current application, these windows being designed for control by means of a touch-sensitive screen covering the screen of the computer, characterized in that it comprises at least one central unit with a microprocessor associated with its RAM and ROM memories (4), a RAM memory for the window position, a RAM memory (2) for data to be displayed in the windows, a keypad interface (5) designed to be connected to the connector (100) of the computer keyboard, and a peripheral circuit (6) for controlling the touch-sensitive keypad (101), and in that an electronic switching system (1) enables it to be interposed between the screen connector (102) of the computer and the screen (103) itself in such a way that it is possible to select in real time the source of the data to be displayed, namely the keyboard (100) or the touch-sensitive keypad (101).

2. Electronic device according to Claim 1, characterized in that it is fitted into a casing which is interposed between the screen output of a computer and the screen itself.

3. Electronic device according to Claim 1, characterized in that it is presented in the form of an electronic card inserted directly into the computer.

4. Electronic device according to Claim 1, characterized in that it is presented in the form of an independent module in a computer.

5. Electronic device according to any of Claims I to 4, characterized in that it comprises a touch-sensitive keypad control unit (6) and a keyboard interface (5) for connection to the host computer, and in that the central unit (4) converts the data from pressure on the touch-sensitive keypad into standard keyboard data for entry into the computer.

6. Electronic device according to any of Claims I to 5, characterized in that the microprocessor part (4) is capable of generating pre-programmed consecutive keystroke sequences for entry into the computer.

7. Electronic device according to Claims 1 to 6, characterized in that with the touch-sensitive keypad covering the computer screen the central unit part (4) is capable of linking the display windows of the device, the pressure on the touch-sensitive keypad and the corresponding keystrokes generated for entry into the computer.

FIG 1

FIG 2

FIG 3